# EUROPEAN PATENT SPECIFICATION

(11) **EP 3 137 251 B1**
(45) Date of publication and mention of the grant of the patent: **03.01.2018**
(21) Application number: 15722094.8
(22) Date of filing: 23.04.2015
(51) Int. Cl.: B23C 3/35, B23B 31/20, B23B 31/22, B23B 31/34

(54) **CLAMP FOR A KEY DUPLICATING MACHINE.**
KLEMMVORRICHTUNG FÜR EINE SCHLÜSSELKOPIERMASCHINE
PINCE POUR UNE MACHINE DE DUPLICATION DE CLÉ

(30) Priority: 30.04.2014 IT VE20140026
(43) Date of publication of application: 08.03.2017
(73) Proprietor: Silca S.P.A., 31029 Vittorio Veneto (IT)
(72) Inventor: DA RODDA, Oreste, I-31020 Revine Lago (IT)
(74) Representative: Piovesana, Paolo
(86) International application number: PCT/EP2015/058784
(87) International publication number: WO 2015/165792

(56) References cited:
- WO-A1-2012/159965
- US-A1- 2002 182 022
- US-A1- 2007 224 008

## Description

The present invention relates to an improved clamp for a key duplicating machine according to the preamble of independent claim 1. Such a machine is known from document WO 2012/159965 A1. Clamps are known for electromechanical and electronic duplicating machines for different types of keys, and in particular for bitted keys, double-bitted keys and dimple keys.

Keys are also known presenting two or more zones to be bitted (defined in the blank key) or already bitted (defined in the original key to be duplicated), and distributed and mutually spaced apart along the key shank.

In particular, a particular type of key is known having its shank of substantially rectangular cross-section, in which the bitting is defined along its four edges. These hence present four bitted zones, one for each shank edge.

This type of key is defined in greater detail in EP 989262, in particular Figures 2a and 2b, is to be taken as wholly incorporated herein by direct reference thereto.

In the context of electronic duplication of this known type of keys, to prevent having to remove the key from the clamp several times, to then reposition it thereon such that all the zones to be bitted face the milling cutter in turn, it is generally preferred to use clamps which are able to be moved or rotated with the key positioned and gripped in them.

In particular, for electronic machines for duplicating keys of this type, a clamp has already been proposed in which the key is positioned by an adapter comprising two grub screws which immobilize one face of the key in positions on its tip and its shank, and which urge its opposite face against a clamp jaw surface.

However, this solution is not optimal in terms of duplication precision as it suffers from axial positioning errors caused mainly by the inevitable operating inaccuracies. Moreover, the step of positioning the key in the clamp is particularly arduous.

An object of the invention is to provide an improved clamp for electronic key duplicating machines which enables the key to be correctly positioned in the clamp easily and quickly, with consequent high duplication precision.

Another object of the invention is to provide a clamp for an electronic duplicating machine which is able to be closed and opened automatically.

Another object of the invention is to provide a clamp for an electronic duplicating machine which is able to rotate the key about its axis.

Another object of the invention is to propose a clamp for a duplicating machine which is of simple, rapid and low-cost production.

These objects and others which will be apparent from the ensuing description are attained, according to the invention, by an improved clamp for an electronic key duplicating machine having the characteristics indicated in claim 1.

The present invention is further clarified hereinafter in a preferred embodiment thereof with reference to the accompanying drawings, in which:

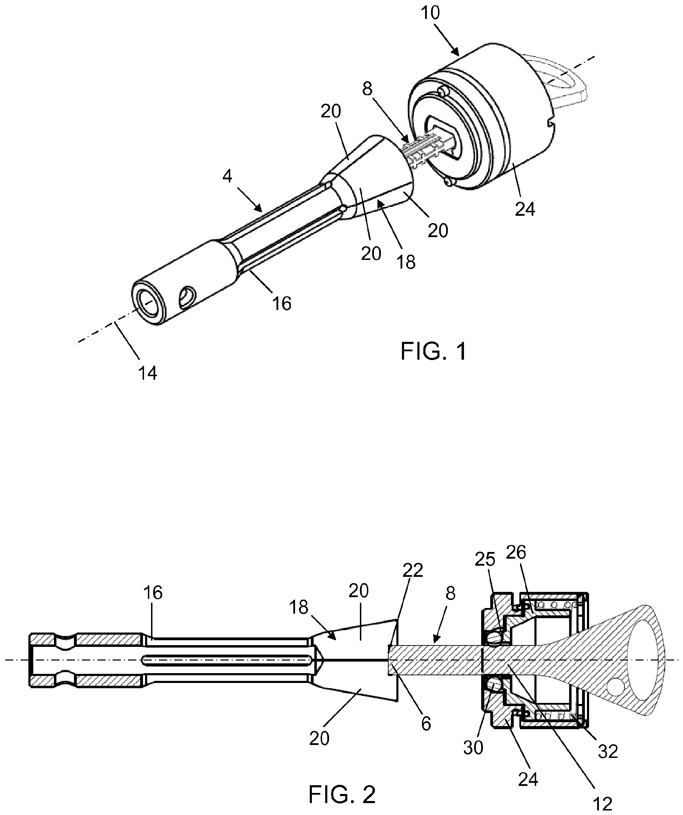

Figure 1 is a perspective view of a detail of the clamp according to the invention,
Figure 2 is a lateral section therethrough,

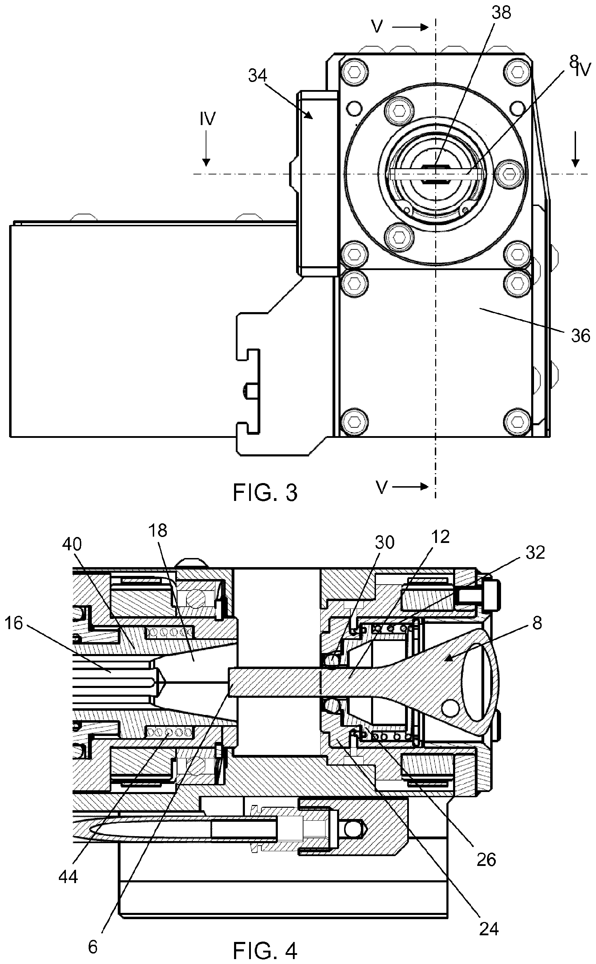

Figure 3 shows the clamp according to the invention in frontal view,
Figure 4 is a view thereof from above, taken on the section IV-IV of Figure 3, and

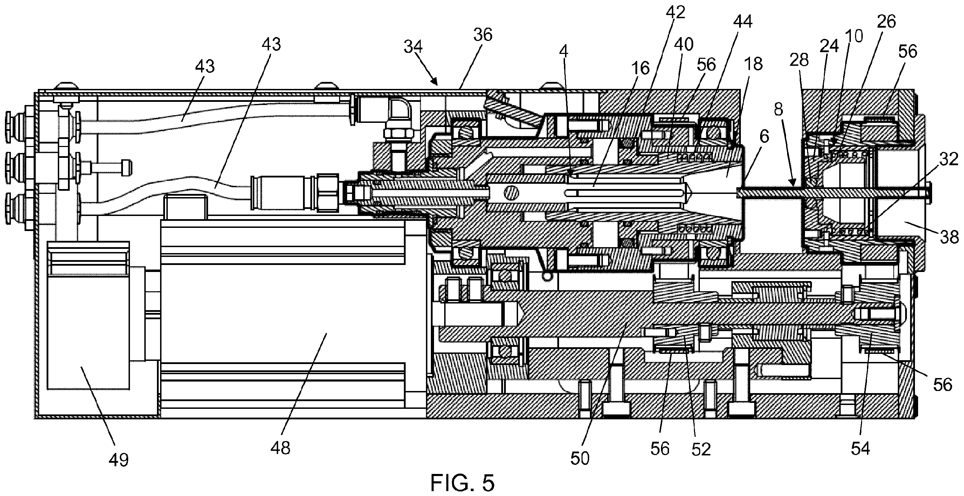

Figure 5 is a longitudinal vertical section therethrough, taken on the line V-V of Figure 3.

As can be seen from the figures, the clamp according to the invention, for an electronic key duplicating machine, comprises a first structure 4 for gripping the tip 6 of a key 8, and a second structure 10 for gripping a portion of the shank 12 of the same key.

The shank 12 of the key generally means any zone of this latter, with the exception of its tip. In particular, the key shank portion can comprise a more or less extensive part defined starting from the head of the key, or can also comprise a part thereof.

The two gripping structures 4 and 10 of the clamp are aligned along a longitudinal axis 14 corresponding to the axis along which the key 8 to be gripped extends. In addition, the structures 4 and 10 are mutually spaced apart, along said axis 14, by a space sufficient to enable the milling cutter of the duplicating machine to operate.

The structure 4 is intended to grip the tip of the key 8, and comprises a self-centring gripper 16, i.e. constructed such as to cause four flaps 20, pertaining to a terminal portion 18 of the gripper, to move in the centripetal sense towards the longitudinal axis 14 of the key to be gripped. In particular, the terminal portion 18 is of frusto-conical shape and, when it is in the closed gripping configuration, i.e. when the four flaps 20 are in mutual contact, it defines in its interior a housing seat 22 for the tip 6 of the key 8.

Preferably, the open configuration of the gripper 16 is instead achieved by utilizing the intrinsic elasticity of the material of construction of said gripper and/or by making the flaps 20 of suitable shape and size.

The structure 10 for gripping the key shank 12 comprises a tubular element 24, for example a bush, internally housing an annular structure 26 slidable in an axial direction.

The bush 24 is shaped to define a frusto-conical surface facing the key shank, a subsequent circumferential step which houses a complementary portion of the annular structure 26, and a further circumferential step which houses a coil spring 32 intended to axially urge said annular structure 26 towards the tip of the key 8.

Between the frusto-conical surface 25 of the bush 24 and that annular surface of the structure 26 facing the key tip, immobilization elements are interposed, preferably in the form of rollers 28 or balls 30, intended to come into contact with the shank 12 of the key 8. In particular, if the shank of the key 8 is of substantially rectangular cross-section, the rollers 28 are intended to come into contact with the major faces of said shank, whereas the balls 30 are intended to come into contact with the minor faces thereof, by the combined effect of the thrust of the rollers 28 and of the balls 30 by the annular structure 26 and of the compulsion of these to slide along the frusto-conical surface of the bush 24.

Moreover, the contact elements 28 and 30 also act as guide elements during the insertion of the key shank into the clamp. The clamp according to the invention is installed in an electronic duplicating machine, not represented, said clamp also comprising a support structure 34 defined by a containing box housing 36, provided with a slot 38 for inserting the key 8; in particularly, this slot 38 is aligned with and faces the structure 10 for gripping the shank 12 of the key 8.

Within the support structure 34, means are provided for activating and deactivating the opening and closure movement of the gripper 16. They comprise a tube 40 which surrounds the gripper 16 and is urged to slide there along by a piston 42 operated by pneumatic means 43.

The end portion of the tube 40 which surrounds the flaps 20 of the gripper 16 has a frusto-conical inner surface, complementary to the outer surface of the flaps, such that the axial movement of the tube against the elastic reaction of a coil spring 44 interposed between the two, causes closure of the gripper, while the elastic return of the tube 40 and the consequent elastic reaction of the flaps 20 causes it to open.

Inside the support structure 34 means are also provided causing engage and disengagement between the contact elements 28 and 30 of the structure 10 and the key shank 12. In greater detail, these means are pneumatic and act on the annular structure 26 in the sense of urging it axially towards the structure 4 against the action of the spring 32.

Essentially, the spring 32 urges the support 26 into an operative position in which the immobilization elements 28 and 30 engage the key shank 12 by friction, while the pneumatic means act against the spring 32, to bring said immobilization elements into a position of disengagement with said shank 12.

A control and command unit (not represented) is also provided for commanding the activation and deactivation of the structures 4 and 10; this command can be individual or combined.

Within the support structure 34 a motor 48 is also provided associated with an encoder 49 provided with a shaft 50 on which two pulleys 52 and 54 are mounted which, by means of corresponding belts 56 or other suitable members, transmit rotary movement from the motor 48 to the structures 4 and 10 respectively. The clamp can hence rotate about its longitudinal axis, corresponding to the mutual alignment axis 14 of the structures 4 and 10, such that, of the gripped key 6, different zones to be bitted can be made to face the working milling cutter. For example, in the case of keys with a shank of rectangular cross-section and with the bitting pattern defined along the four edges of the shank, the clamp is rotated into four different angular positions (0°, 90°, 180° and 270°) such that, in each of these, a different edge of the key, and hence a different zone to be bitted, is made to face the electronic duplicating machine.

The operation of the clamp according to the invention clearly derives from the aforegoing description. In particularly, the original key to be duplicated is inserted into the clamp in the slot 38 of the support structure 34. At the moment of insertion, the gripper 16 of the structure 4 is in its open configuration, while the contact elements 28 and 30 of the structure 10 are maintained in the activated state by the spring 32.

During this step of inserting the key 8, the terminal part of its shank 12 passes through the gripping structure 10 and is guided towards the end portion 18 by the self-centring gripper 16 of the immobilization elements 28 and 30, which are in the deactivated state in that the pneumatic means associated with the structure 10 maintain the spring 32 stressed.

At this point, the pneumatic means of the structure 4 are activated such that the end portion 18 of the self-centring gripper 16 closes about the key tip 6; at the same time, the pneumatic means of the structure 10 are deactivated such that the spring 32 causes the immobilization means 28 and 30 to immobilize that portion of the shank 12 of the key 6 which traverses the tubular element 24.

After the milling cutter, commanded by the electronic duplicating machine, has implemented bitting of the blank key along a first edge (or other zone) of the key shank, the motor 48 causes the clamp, and hence also the key, to undergo a partial rotation such as to bring a different edge or a different zone of the key to face the milling cutter.

On termination of key duplication, the pneumatic means of the structure 4 are deactivated, causing the gripper 16 to open and hence release the key tip 6; the pneumatic means of the structure 10 are also deactivated, hence causing the immobilization elements 28 and 30 to disengage from the key shank 12. In this manner the key can be released and easily extracted from the clamp. The seat 22 formed in the gripper 16 for the key tip, and the passage seat for the shank, formed in the bush 24 and in the annular structure 26, are related to the shape of the shank cross-section, and for this it is advantageous to enable the two structures 4 and 10 to be suitably adapted such that different types of keys can be immobilized.

From the aforegoing, it is apparent that the improved clamp according to the invention is particularly advantageous in that:
- the two gripping structures 4 and 10 ensure precise and stable immobilization of the key;
- key positioning is easy, quick and correct; in particular, this is due to the fact that the gripper is self-centring, that the two gripping structures are mutually aligned along the axis along which the key to be clamped extends, and that the immobilization elements 28 and 30 of the second structure 10 are present, and which during the key insertion step act as a guide for the key shank 12;
- its use can be easily automated; in particular, even the insertion of the key into the clamp can be completely automated by using suitably programmed mechatronic systems (for example manipulators).

As is apparent from the description and drawings, the clamp according to the invention is particularly suitable for duplication of keys in which the bitting is defined along the four edges of their shank. However, the clamp according to the invention can be used generally for other types of keys in which the shank presents at least two or more zones which are bitted or are to be bitted.

## Claims

1. A clamp for an electronic key duplicating machine, comprising:
- a first structure (4) for a key (8), intended to immobilize the tip (6) of said key,
- a second structure (10) for gripping a portion of the key shank (12) by immobilization elements (28, 30) intended to come into contact with said portion of the shank (12) of the key (8) and engage it by friction,
- said first structure (4) and second structure (10) being aligned and mutually spaced apart along the axis (14) along which the key (8) to be clamped extends, **characterised in that** the first structure (4) grips the tip of the key (8) and said first (4) and second (10) structures being associated with means (48, 50, 52, 54, 56) for its rotation about said axis and its immobilization in the desired angular position.

2. A clamp as claimed in claim 1, **characterised in that** said self-centring gripper (16) comprises an end portion (18) with flaps (20) which open and close radially.

3. A clamp as claimed in one or more of the preceding claims, **characterised in that** in the end portion (18) of said flaps (20) of said self-centring gripper (16), a housing seat (22) is provided which, when the gripper is in its activated configuration, engages the tip (6) of the key (8) to be gripped.

4. A clamp as claimed in one or more of the preceding claims, **characterised in that** said immobilization elements (28, 30) are configuration such as to engage the key shank (12) by friction and act as a guide therefor during key insertion into the clamp.

5. A clamp as claimed in one or more of the preceding claims, **characterised in that** said immobilization elements (28, 30) comprise cylindrical elements (28) intended to come into contact with the major faces of the shank (12) of the key (8), and/or spherical elements (30) intended to come into contact with the minor faces thereof.

6. A clamp as claimed in one or more of the preceding claims, **characterised in that** said second structure (10) comprises a tubular element (24) slidably housing internally a structure (26), said immobilization elements (28, 30) being interposed between the element (24) and structure (26), to cooperate with a frusto-conical surface provided in said tubular element (24) following the thrust exerted on them by the axial movements of said annular structure (26).

7. A clamp as claimed in one or more of the preceding claims, **characterised in that** pneumatic means acting against elastic means (44) are associated with said first structure (4) to cause said self-centring gripper (16) to pass from a closed working configuration to an open rest configuration.

8. A clamp as claimed in one or more of the preceding claims, **characterised in that** pneumatic means acting against elastic means (32) are associated with said second structure (10) to cause said immobilization elements (28, 30) to pass from a working configuration in which they adhere to the shank (12) of said key (8), to a rest configuration.

9. A clamp as claimed in claim 7 and/or 8, **characterised in that** said pneumatic means are associated with a processor unit for commanding their individual and/or combined activation and their deactivation.

10. A clamp as claimed in one or more of the preceding claims, **characterised by** comprising means (48, 50, 52, 54, 56) for causing synchronized rotation of said first structure (4) and said second structure (10) about their alignment axis (14).

## Patentansprüche

1. Spannvorrichtung für eine elektronische Schlüsselvervielfältigungsmaschine, umfassend:
- eine erste Struktur (4) für einen Schlüssel (8), die dazu dient, die Spitze (6) des Schlüssels zu immobilisieren,
- eine zweite Struktur (10) zum Greifen eines Teil des Schlüsselschaftes (12) durch Immobilisierungselemente (28, 30), die dazu dienen, dass sie in Kontakt mit dem Schaftteil (12) des Schlüssels (8) treten und durch Reibung in diesen eingreifen,
- die erste Struktur (4) und die zweite Struktur (10) aufeinander ausgerichtet sind und entlang der Achse (14) und des zu spannenden Schlüssels (8) gleichmäßig zueinander beabstandet sind, **gekennzeichnet dadurch, dass** die erste Struktur (4) die Spitze des Schlüssels (8) ergreift und die zweite (10) Struktur mit Mitteln (48, 50, 52, 54, 56) verbunden ist, um eine Drehung um die Achse und ihre Immobilisierung in der gewünschten Winkelposition auszulösen.

2. Spannvorrichtung laut Anspruch 1, **dadurch gekennzeichnet, dass** der selbstzentrierende Greifer (16) ein Endstück (18) mit Klappen (20), die sich radial öffnen und schließen, umfasst.

3. Spannvorrichtung laut einem oder mehreren der vorhergehenden Ansprüche, **dadurch gekennzeichnet, dass** sich im Endstück (18) der Klappen (20) des selbstzentrierenden Greifers (16) ein Gehäusesitz (22) befindet, der, wenn sich der Greifer in seiner aktivierten Stellung befindet, in die Spitze (6) des Schlüssels (8) eingreift, um diesen festzuhalten.

4. Spannvorrichtung laut einem oder mehreren der vorhergehenden Ansprüche, **dadurch gekennzeichnet, dass** die Immobilisierungselemente (28, 30) so konfiguriert sind, das sie durch Reibung in den Schlüsselschaft (12) eingreifen und während des Einsetzens des Schlüssels in die Spannvorrichtung als Führung dienen.

5. Spannvorrichung laut einem oder mehreren der vorhergehenden Ansprüche, **dadurch gekennzeichnet, dass** die Immobilisierungselemente (28, 30) zylindrische Elemente (28) umfassen, die dazu dienen, dass sie in Kontakt mit den Hauptflächen des Schaftes (12) des Schlüssels (8) treten und/oder Kugeln (30) umfassen, die dazu dienen, dass sie in Kontakt mit den kleinen Flächen des Schlüssels treten.

6. Spannvorrichtung laut einem oder mehreren der vorhergehenden Ansprüche, **dadurch gekennzeichnet, dass** die zweite Struktur (10) ein rohrförmiges Element (24) umfasst, das in seinem Inneren eine verschiebbare Struktur (26) aufnimmt, dass die Immobilisierungselemente (28,30) zwischen das Element (24) und die Struktur (26) gesetzt werden, um mit einer kegelstumpfförmigen Oberfläche, die das rohrförmige Element (24) aufweist, nach dem Schub, der durch die axialen Bewegungen der ringförmigen Struktur (26) ausgeübt wird, interagiert.

7. Spannvorrichtung laut einem oder mehreren der vorhergehenden Ansprüche, **dadurch gekennzeichnet, dass** die pneumatischen Mittel, die gegen die elastischen Mittel (44) stoßen, mit der ersten Struktur (4) verbunden sind, so dass der selbstzentrierende Greifer (16) aus einer geschlossenen Stellung in eine offene Ruhestellung wechselt.

8. Spannvorrichtung laut einem oder mehreren der vorhergehenden Ansprüche, **dadurch gekennzeichnet, dass** die pneumatischen Mittel (32) mit der zweiten Struktur (10) verbunden sind, so dass die Immobilisierungselemente (28, 30) aus einer geschlossenen Arbeitsstellung, in der sie am Schaft (12) des Schlüssels (8) anliegen, in eine offene Ruhestellung wechseln.

9. Spannvorrichtung laut Anspruch 7 und/oder 8, **dadurch gekennzeichnet, dass** die pneumatischen Mittel mit einem Prozessor verbunden sind, um ihre individuelle und/oder kombinierte Aktivierung und Deaktivierung zu steuern.

10. Spannvorrichtung laut einem oder mehreren der vorhergehenden Ansprüche, **dadurch gekennzeichnet, dass** sie Mittel (48, 50, 52, 54, 56) umfasst, die eine synchrone Drehung der ersten Struktur (4) und der zweiten Struktur (10) um ihre Ausrichtungsachse (14) auslösen.

## Revendications

1. Une pince destinée à une machine de duplication de clé électronique, comprenant :
- une première structure (4) destinée à une clé (8) et conçue pour immobiliser l'extrémité (6) de ladite clé,
- une seconde structure (10) destinée à enserrer une partie de la tige de clé (12) à l'aide de plusieurs éléments d'immobilisation (28, 30) conçus pour entrer en contact avec ladite partie de la tige (12) de la clé (8) et pour l'engager par friction,
- ladite première structure (4) et ladite seconde structure (10) étant alignées et mutuellement espacées le long de l'axe (14) d'extension de la clé (8) à enserrer, et **caractérisées en ce que** la première structure (4) enserre l'extrémité de la clé (8) et **en ce que** ladite première structure (4) et ladite seconde structure (10) sont associées par des moyens (48, 50, 52, 54, 56) qui permettent leur rotation autour dudit axe et leur immobilisation à une position angulaire souhaitée.

2. Une pince conforme à la revendication 1 et **caractérisée en ce que** l'outil de préhension à centrage automatique (16) comprend une partie d'extrémité (18) dotée de volets (20) qui s'ouvrent et se ferment de façon radiale.

3. Une pince conforme à une ou plusieurs des revendications précédentes, **caractérisée en ce que** la partie d'extrémité (18) desdits volets (20) dudit outil de préhension à centrage automatique est dotée d'un siège (22) qui, lorsque l'outil de préhension est en configuration activée, engage l'extrémité (6) de la clé (8) à enserrer.

4. Une pince conforme à une ou plusieurs des revendications précédentes, **caractérisée en ce que** lesdits éléments d'immobilisation (28, 30) sont conçus pour engager la tige de clé (12) par friction et agir comme un guide pour ladite tige pendant l'insertion de la clé dans la pince.

5. Une pince conforme à une ou plusieurs des revendications précédentes, **caractérisée en ce que** lesdits éléments d'immobilisation (28, 30) comprennent des éléments cylindriques conçus pour entrer en contact avec les faces principales de la tige (12) de la clé (8), et/ou des éléments sphériques (30) conçus pour entrer en contact avec les faces mineures de ladite tige de clé.

6. Une pince conforme à une ou plusieurs des revendications précédentes, **caractérisée en ce que** ladite seconde structure (10) comprend un élément tubulaire (24) qui abrite de manière coulissante une structure (26), lesdits éléments d'immobilisation (28, 30) étant interposés entre l'élément (24) et la structure (26), de manière à coopérer avec une surface tronconique située dans ledit élément tubulaire (24) après l'application sur eux d'une poussée générée par les mouvements axiaux de ladite structure annulaire (26).

7. Une pince conforme à une ou plusieurs des revendications précédentes, **caractérisée en ce que** des moyens pneumatiques qui agissent contre des moyens élastiques (44) sont associés à ladite première structure (4) de manière à faire passer l'outil de préhension à centrage automatique (16) d'une configuration de travail fermée à une configuration de repos ouverte.

8. Une pince conforme à une ou plusieurs des revendications précédentes, **caractérisée en ce que** des moyens pneumatiques qui agissent contre des moyens élastiques (32) sont associés à ladite seconde structure (10) afin de faire passer lesdits éléments d'immobilisation (28, 30) d'une configuration de travail dans laquelle ils adhèrent à la tige (12) de ladite clé (8), à une configuration de repos.

9. Une pince conforme à la revendication 7 et/ou à la revendication 8, **caractérisée en ce que** lesdits moyens pneumatiques sont associés à une unité de processeur destinée à commander leur activation individuelle et/ou combinée ainsi que leur désactivation.

10. Une pince conforme à une ou plusieurs des revendications précédentes, **caractérisée en ce qu'**elle comprend des moyens (48, 50, 52, 54, 56) destinés à entraîner une rotation synchronisée de ladite première structure (4) et de ladite seconde structure (10) autour de leur axe d'alignement (14).
